(19) Europäisches Patentamt
European Patent Office
Office européen des brevets

(11) EP 4 708 797 A1

(12) EUROPEAN PATENT APPLICATION

(43) Date of publication:
11.03.2026 Bulletin 2026/11

(21) Application number: 25200224.1

(22) Date of filing: 04.09.2025

(51) International Patent Classification (IPC):
H04L 41/0677 (2022.01)   H04L 41/142 (2022.01)
H04L 41/16 (2022.01)   H04L 41/12 (2022.01)
H04L 43/065 (2022.01)   H04L 43/12 (2022.01)

(52) Cooperative Patent Classification (CPC):
H04L 41/0677; H04L 41/142; H04L 41/16;
H04L 41/12; H04L 43/065; H04L 43/12

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 04.09.2024 US 202418824484

(71) Applicant: RAD Data Communications Ltd.
69719 Tel Aviv (IL)

(72) Inventors:
• KUTTNER, Yosef Yehuda
69719 TEL-AVIV (IL)
• EPSTEIN, Shabtai
69719 TEL-AVIV (IL)
• INSLER, Ron
69719 TEL-AVIV (IL)

(74) Representative: Regimbeau
20, rue de Chazelles
75847 Paris Cedex 17 (FR)

(54) **LOCALIZATION OF ANOMALY-LINKED EQUIPMENT IN TELECOM PROVIDER NETWORKS**

(57) There is provided a processing circuitry-based method of localizing anomaly-associated equipment in a telecom network, comprising: a) receiving, from network monitors within the telecom network, network connectivity reports, wherein each report comprises: a respective telecom network region associated with a respective telecom network region hierarchy (TNRH), and a respective session anomaly status, b) training a classification tree-based machine learning model to classify a sequence telecom network region identifiers to an anomaly status, utilizing, a plurality of training tuples where each training tuple is based on a respective received network connectivity report; and c) identifying a telecom network region as including anomaly-associated equipment, based on identifying a decision path in the classification tree-based machine learning model, wherein a leaf of the identified decision path is associated with a given anomaly status.

Fig. 2

EP 4 708 797 A1

## Description

## TECHNICAL FIELD

The presently disclosed subject matter relates to telecommunication networks, and in particular to implementation of systems for maintenance and troubleshooting of such networks.

## BACKGROUND

Problems of implementation in systems of identification and localization of faulty equipment in telecom networks have been recognized in the conventional art and various techniques have been developed to provide solutions.

## GENERAL DESCRIPTION

According to one aspect of the presently disclosed subject matter there is provided a computer-implemented method of localizing anomaly-associated equipment in a telecom network, the method comprising:

a) receiving, from a plurality of network monitors within the telecom network, a plurality of network session reports, wherein each report comprises:

i. data indicative of a telecom network region of an endpoint system of a respective network session, and

ii. data indicative of a respective session anomaly status,

wherein the telecom network region of the endpoint system is associated with a respective telecom network region hierarchy (TNRH),

the respective TNRH comprising a sequence of one or more telecom network regions, each telecom network region of the respective TNRH including, at least, respective telecom network equipment engineered to be traversed by data traffic to and/or from the respective endpoint system;

b) training a classification tree-based machine learning model to classify a sequence of one or more telecom network region identifiers to an anomaly status, utilizing, at least, a plurality of training tuples where each training tuple is based on, at least, a respective received network session report; and

c) identifying a telecom network region as including anomaly-associated equipment, based on, at least, identifying a decision path in the classification tree-based machine learning model, wherein a leaf of the identified decision path is associated with a given anomaly status.

In addition to the above features, the system according to this aspect of the presently disclosed subject matter can comprise one or more of features (i) to (vi) listed below, in any desired combination or permutation which is technically possible:

(i) the training comprises:

a) training the classification tree-based machine learning model to classify a sequence of one or more telecom network region identifiers to an anomaly status, utilizing, at least, the one or more training tuples, thereby giving rise to an initial classification tree;

b) for one or more iterations: performing cost-complexity pruning on the initial classification tree, the pruning being based on a respective pruning complexity parameter, thereby resulting in one or more candidate pruned classification trees;

c) selecting at least one of the candidate pruned classification trees according to a classification tree selection criterion, and utilizing the selected pruned classification tree.

(ii) the training comprises recursive splitting

(iii) one or more of the network session reports additionally comprises data indicative of a session application type, and wherein the identifying further identifies an anomaly-associated session application type, based on the identified decision path.

(iv) one or more of the network session reports additionally comprises data indicative of an endpoint type, and wherein the identifying further identifies an anomaly-associated endpoint application type, based on the identified decision path

(v) the training utilizes a first proportion of the network session reports to train the machine learning model, and second proportion of the network session reports to evaluate the training of the machine learning.

(vi) additionally comprising:

a) detecting, in the trained classification tree-based machine learning model, a node from which two leafs of identical anomaly status descend; and

b) removing the detected node from the trained classification tree-based machine learning model.

According to another aspect of the presently disclosed subject matter there is provided a computer system of localizing anomaly-associated equipment in a telecom network, the system comprising a processing circuitry (PC) configured to:

a) receive, from a plurality of network monitors within the telecom network, a plurality of network session reports, wherein each report comprises:

i. data indicative of a telecom network region of an endpoint system of a respective network session, and

ii. data indicative of a respective session anomaly status,

wherein the telecom network region of the endpoint system is associated with a respective telecom network region hierarchy (TNRH),

the respective TNRH comprising a sequence of one or more telecom network regions, each telecom network region of the respective TNRH including, at least, respective telecom network equipment engineered to be traversed by data traffic to and/or from the respective endpoint system;

b) train a classification tree-based machine learning model to classify a sequence of one or more telecom network region identifiers to an anomaly status, utilizing, at least, a plurality of training tuples where each training tuple is based on, at least, a respective received network session report; and

c) identify a telecom network region as including anomaly-associated equipment, based on, at least, identifying a decision path in the classification tree-based machine learning model, wherein a leaf of the identified decision path is associated with a given anomaly status.

This aspect of the disclosed subject matter can further optionally comprise one or more of features (i) to (vi) listed above with respect to the method, mutatis mutandis, in any desired combination or permutation which is technically possible.
According to another aspect of the presently disclosed subject matter there is provided a computer program product comprising a computer readable non-transitory storage medium containing program instructions, which program instructions when read by a processor, cause the processing circuitry to perform a method of drawing a fluid from a fluid container into a syringe, the method comprising:

a) receiving, from a plurality of network monitors within the telecom network, a plurality of network session reports, wherein each report comprises:

i. data indicative of a telecom network region of an endpoint system of a respective network session, and

ii. data indicative of a respective session anomaly status,

wherein the telecom network region of the endpoint system is associated with a respective telecom network region hierarchy (TNRH),

the respective TNRH comprising a sequence of one or more telecom network regions, each telecom network region of the respective TNRH including, at least, respective telecom network equipment engineered to be traversed by data traffic to and/or from the respective endpoint system;

b) training a classification tree-based machine learning model to classify a sequence of one or more telecom network region identifiers to an anomaly status, utilizing, at least, a plurality of training tuples where each training tuple is based on, at least, a respective received network session report; and

c) identifying a telecom network region as including anomaly-associated equipment, based on, at least, identifying a decision path in the classification tree-based machine learning model, wherein a leaf of the identified decision path is associated with a given anomaly status.

This aspect of the disclosed subject matter can further optionally comprise one or more of features (i) to (vi) listed above with respect to the method, mutatis mutandis, in any desired combination or permutation which is technically possible.

**BRIEF DESCRIPTION OF THE DRAWINGS**

In order to understand the invention and to see how it can be carried out in practice, embodiments will be described, by way of non-limiting examples, with reference to the accompanying drawings, in which:

**Fig. 1** illustrates an example architecture of a provider network, in accordance with some embodiments of the presently described subject matter;

**Fig. 2** illustrates an example diagram of an example hierarchy of network regions within a telecom provider network, in accordance with some embodiments of the presently described subject matter;

**Fig. 3** illustrates an example block diagram of an example network monitoring system, in accordance with some embodiments of the presently described subject matter;

**Fig. 4A** illustrates an example an example structure of a network connectivity report message, in accordance with some embodiments of the presently described subject matter;

**Fig. 4B** illustrates another example structure of a network connectivity report message, in accordance with some embodiments of the presently described subject matter;

**Fig. 4C** illustrates another example structure of a network connectivity report message, in accordance with some embodiments of the presently described subject matter;

**Fig. 5** illustrates an example structure of a trained CART machine learning model, in accordance with some embodiments of the presently described subject matter;

**Fig. 6** illustrates an additional example structure of a trained CART machine learning model, in accordance with some embodiments of the presently described subject matter;

**Fig. 7** illustrates a flow diagram of an example method of localizing an anomaly within a telecom provider network, based on machine learning-based modeling of the network, in accordance with some embodiments of the presently described subject matter;

**Fig. 8** illustrates a flow diagram of an example machine learning model-based method of optimizing a classification tree for utilization in localizing anomalies in a telecom provider network, in accordance with some embodiments of the presently described subject matter; and

**Fig. 9** illustrates a flow diagram of an anomaly localization rule table derived from analysis of a trained CART machine learning model (classification tree), in accordance with some embodiments of the presently described subject matter.

## DETAILED DESCRIPTION

In the following detailed description, numerous specific details are set forth in order to provide a thorough understanding of the invention. However, it will be understood by those skilled in the art that the presently disclosed subject matter may be practiced without these specific details. In other instances, well-known methods, procedures, components and circuits have not been described in detail so as not to obscure the presently disclosed subject matter.

Unless specifically stated otherwise, as apparent from the following discussions, it is appreciated that throughout the specification discussions utilizing terms such as "processing", "computing", "comparing", "encrypting", "decrypting", "determining", "calculating", "receiving", "providing", "obtaining", "emulating" or the like, refer to the action(s) and/or process(es) of a computer that manipulate and/or transform data into other data, said data represented as physical, such as electronic, quantities and/or said data representing the physical objects. The term "computer" should be expansively construed to cover any kind of hardware-based electronic device with data processing capabilities including, by way of non-limiting example, the processor, mitigation unit, and inspection unit therein disclosed in the present application.

The terms "non-transitory memory" and "non-transitory storage medium" used herein should be expansively construed to cover any volatile or non-volatile computer memory suitable to the presently disclosed subject matter.

The operations in accordance with the teachings herein may be performed by a computer specially constructed for the desired purposes or by a general-purpose computer specially configured for the desired purpose by a computer program stored in a non-transitory computer-readable storage medium.

Embodiments of the presently disclosed subject matter are not described with reference to any particular programming language. It will be appreciated that a variety of programming languages may be used to implement the teachings of the presently disclosed subject matter as described herein.

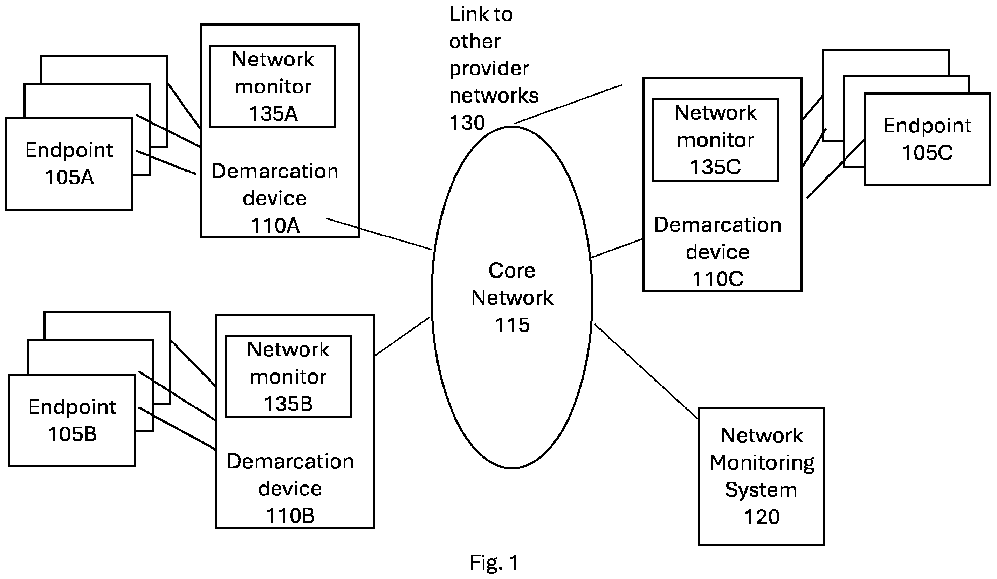

**Fig. 1** illustrates an example architecture of a provider network, in accordance with some embodiments of the presently disclosed subject matter.

The provider network can include core network **115**. Core network **115** can be utilize various communication media eg. long-haul optical, satellite, combinations thereof etc. to provide connectivity over the provider's area of service. Core network **115** can be operably connected, via various types of wired/wireless communication links, to demarcation devices **110A 110B 110C**. Core network **115** can further be operably connected to networks for other telecom providers via a link to other provider networks **130**.

Demarcation devices **110A 110B 110C** can be various kinds of e.g. last mile devices, such as consumer premises equipment (CPE), Optical network terminal (ONT) or associated network interface device (NID) etc. Demarcation devices **110A 110B 110C** can be operably connected to communication endpoints **105A 105B 105C** via appropriate communication links (e.g. cellular, fiberoptic, hybrid fiber-coaxial etc.). Each demarcation device **110A 110B 110C** can be associated with an identifier termed a SiteId. In some examples, a SiteId can be utilized as a telecom network region identifier, as described below.

Demarcation devices **110A 110B 110C** can include network monitor components **135A 135B 135C** respectively. Network monitor **135A 135B 135C** can be components which monitor packet traffic traversing respective demarcation devices **110A 110B 110C** and transmit network connectivity reports to network monitoring system **120,** as described in detail below. It is noted that network monitor **135A 135B 135C** can, in some examples, be standalone devices, or be embedded in other communications equipment. It is further noted that network monitor **135A 135B 135C** can, in some examples, be located in various locations of the provider's network.

Communication endpoints **105A 105B 105C** can be any kind of endpoint system e.g. personal computers, servers, mobile devices, game devices, embedded systems, sensors etc. Communication endpoints **105A 105B 105C** can be located within consumer networks, corporate networks, cellular networks etc. Communication endpoints **105A 105B 105C** can be located within a content distribution network. Communication endpoints **105A 105B 105C** can be located within a cloud provider system.

Communication endpoints **105A 105B 105C** can conduct sessions with other communication endpoints. If a communication endpoint **105A 105B 105C** is a server, it can conduct sessions with clients. If a communication endpoint **105A 105B 105C** is a client, it can conduct sessions with servers. Sessions between endpoints can be based on web protocols, voice or video session protocols, remote storage protocols, or any other kind of session.

Network monitoring system **120** can be located anywhere in the network. In the example shown in **Fig. 1,** network monitoring system **120** is operably connected to core network **115.**

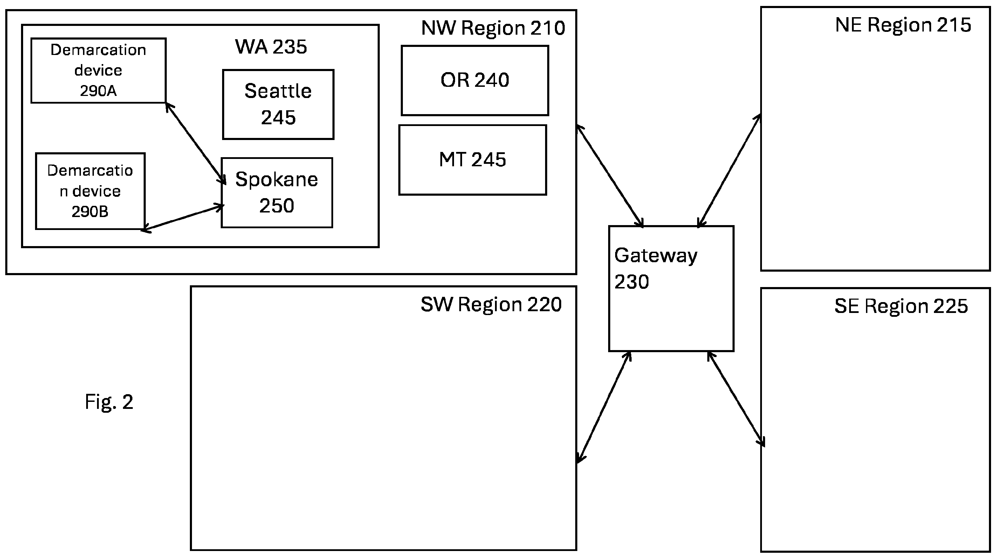

Network monitoring system **120** can maintain data describing distinct regions of the provider network (as described in more detail below with reference to **Fig. 2**).

Network monitoring system **120** can receive network connectivity reports, which can describe status of connectivity in a network region. For example: a network connectivity report can describe status of a session involving a particular endpoint system. Network monitoring system **120** can perform localization of network anomalies, using methods as described hereinbelow.

**Fig. 2** illustrates a diagram of an example hierarchy of network regions within a telecom provider network.

A telecom provider network can be divided into distinct regions. A telecom network region can be - for example - a subset of the provider network that is associated with a particular geographic region, a particular type of network service etc. A telecom network region can include a number of demarcation devices (e.g. consumer access devices such as Optical Network Units (ONUs), Digital Subscriber Line (DSL) routers etc.). Such demarcation devices can be operably connected to endpoint systems (e.g. personal computers, smartphones etc.)

A telecom network region can further include communication links between demarcation devices and gateways for transporting packets to/from other regions or other providers. A telecom network region can further include equipment for providing security, managing service quality etc.

In the example shown in **Fig. 2,** the provider network consists of 4 highest-level regions: NW region **210,** NE region **215,** SW region **220,** SE region **225.** These 4 highest-level regions can be operably connected by e.g. gateway **230.**

For NW Region **210,** additional levels of network hierarchy are shown. NW Region **210** includes WA **235,** OR **240,** and MT **245.** WA **235,** in turn, includes Seattle **245** and Spokane **250.** Spokane **250** can include demarcation devices **290A** and **290B,** as well as respective associated endpoint systems (not shown). Demarcation devices **290A** and **290B** can include network monitors (not shown). The various regions can include various communication links, switching devices, other network equipment etc.

It will be understood that there can be any number of levels of hierarchy, both in NW Region **210** and other regions. It will be understood that the network regions of **Fig. 2** are for illustrative purposes, and there can be any number of network regions at any level of a hierarchy.

It is noted that each network region is associated with a particular sequence of network regions termed a "telecom network region hierarchy" (TNRH). Thus, for a lowest-level network region e.g. Spokane **250,** the TNRH thus include NW Region **210,** WA **235** and Spokane **250.** It is further noted that packet data (e.g. from outside the provider network) traveling to an endpoint in Spokane **250** can be required to traverse NW Region **210,** and WA **235,** as well as Spokane **250.**

Various operational problems can occur in provider networks. These can include: communication link failures, failures of switching devices or security appliances, transient or non-transient episodes of packet load exceeding network capacity, and the like.

Some embodiments of the presently disclosed subject matter provide a system of receiving connectivity reports from different parts of the provider network, and performing analysis of these reports in order to localize these anomalies to specific regions of the provider network (i.e. perform a kind of root cause analysis).

In some such embodiments, network monitoring system **120** periodically trains a machine learning model to emulate the current state of the provider network. Network monitoring system **120** can then further analyze the trained model to localize anomalies and/or discern particular anomaly-associated applications or endpoint types, as described in detail below.

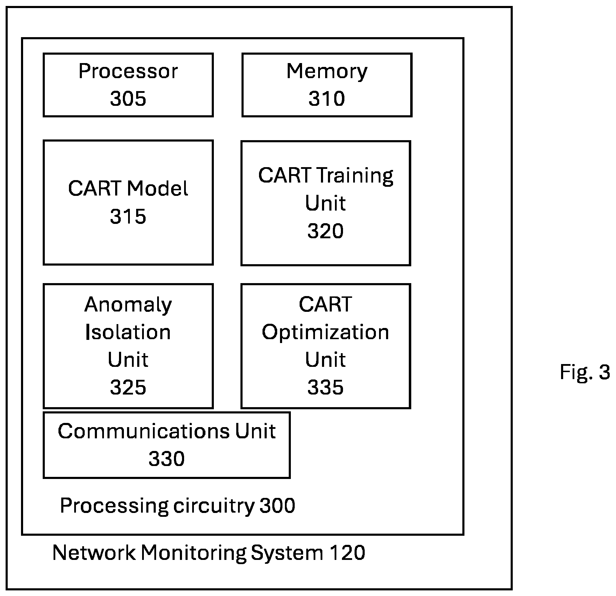

**Fig. 3** illustrates a block diagram of an example network monitoring system **120,** in accordance with some embodiments of the presently disclosed subject matter.

Network monitoring system **120** can include a processing circuitry **300.** processing circuitry **300** can include processor **305** and memory **310.**

Processor **305** can be a suitable hardware-based electronic device with data processing capabilities, such as, for example, a general purpose processor, digital signal processor (DSP), a specialized Application Specific Integrated Circuit (ASIC), one or more cores in a multicore processor, etc. Processor **305** can also consist, for example, of multiple processors, multiple ASICs, virtual processors, combinations thereof etc.

Memory **310** can be, for example, a suitable kind of volatile and/or non-volatile storage, and can include, for example, a single physical memory component or a plurality of physical memory components. Memory **310** can also include virtual memory. Memory **310** can be configured to, for example, store various data used in computation.

Processing circuitry **300** can be configured to execute several functional modules in accordance with computer-readable instructions implemented on a non-transitory computer-readable storage medium. Such functional modules are referred to hereinafter as comprised in the processing circuitry. These modules can include, for example: Classification and Regression Tree (CART) model **315,** CART training unit **320,** anomaly isolation unit **325,** and communication unit **330.**

Communications unit **330** can be a hardware-/software module which transmits data to and receives data from other entities in a provider network. Communications unit **330** can utilize a suitable wired or wireless communication method. In some embodiments, communications unit **330** can receive network connectivity reports transmitted by network monitors **135A 135B 135C.**

Classification and Regression Tree (CART) model **315** can be an implementation of a suitable CART machine learning model, and can utilize any suitable data structure or data structures. In some embodiments, Classification and Regression Tree (CART) model **315** can store implement tree structures such as those described below. In some embodiments, CART model **315** is trained to model the current state of the provide network. CART model **315** can then (i.e. after training) be analyzed, and diagnostic information - e.g. regarding localization and isolation of network problems - can be determined.

It is noted that in some embodiments of the presently disclosed subject matter, the trained CART model is not utilized for classification. It is noted that CART models - unlike some other types of machine learning models - can be traversed and analyzed such that deterministic rules can be derived from them, as will be described below.

In some embodiments, other tree-based models are utilized in the place of CART model **315,** such as iterative dichotomizer 3 (ID3) trees or gradient boosted trees.

In some embodiments, non-tree machine learning models are utilized.

CART training unit **320** can process received network connectivity reports to generate training data, and utilize the generated training data to perform training of CART model **315,** as described below. In some embodiments, CART training unit **320** maintains provider network topology information, and can map session IP addresses to network regions when generating training data.

Anomaly isolation unit **325** can perform analysis on a trained CART model **315** to e.g. localize network problems - as described below. In some embodiments of the presently disclosed subject matter, anomaly isolation unit **325** extracts deterministic rules from CART model **315,** and these rules are indicative of the locality of network anomalies. Thus, in some such embodiments, CART model **315** is never used for classification per se.

It is noted that the teachings of the presently disclosed subject matter are not bound by the system described with reference to **Fig. 3.** Equivalent and/or modified functionality can be consolidated or divided in another manner and can be implemented in any appropriate combination of software with firmware and/or hardware and executed on a suitable device. The system can be a standalone entity, or integrated, fully or partly, with other entities.

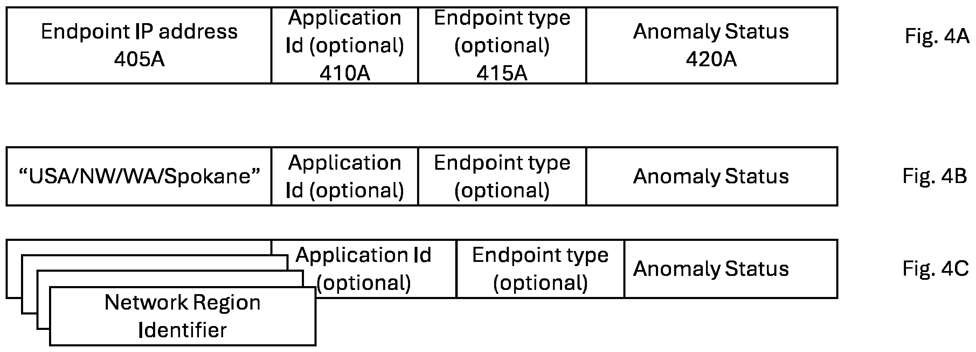

**Fig. 4A** illustrates an example structure of a network connectivity report message, in accordance with some embodiments of the presently disclosed subject matter.

Endpoint IP address **405A** can be an internet protocol (IP) address associated with an endpoint to which the network connectivity report message pertains.

Anomaly status **420A** can be a value indicating a current state of a session with the endpoint e.g.: normal vs. anomalous, normal vs. congested etc.

Optional field applicationId **410A** can be a value indicative of an application type of a session of which the anomaly status is being report e.g. videoconference, media stream etc.

Optional field endpoint type **415A** can be a value indicative of an endpoint type e.g. content data network (CDN), cloud etc.

It is noted that network connectivity reports can utilize various kinds of data to identify the endpoint. **Fig. 4B** illustrates another example structure of a network connectivity report message. In this example, rather than an IP address, a character string specifying the telecom network region hierarchy of the region whose anomaly status is being reported is included.

**Fig. 4C** illustrates another example structure of a network connectivity report message. In this example, a vector of network region identifiers is included to specify the telecom network region hierarchy of a network region whose anomaly status is being reported. The network region identifiers can be any kind of suitable data format e.g. character strings, defined constant values etc.

Network monitoring system **120** can generate machine learning model training data from the received network connectivity reports.

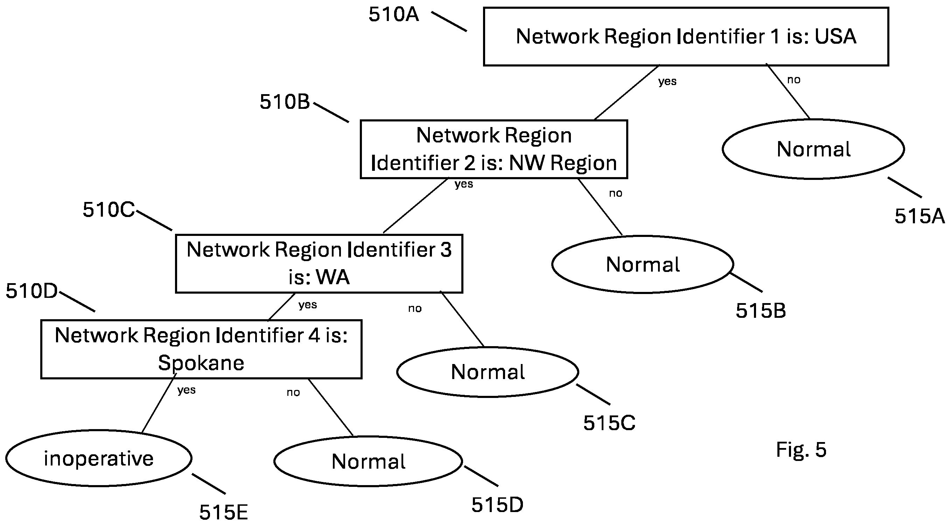

**Fig. 5** illustrates an example structure of a trained CART machine learning model, in accordance with some embodiments of the presently disclosed subject matter.

CART machine learning model **315** can be trained to classify data input data indicative of a telecom network region hierarchy, the classification thereby resulting in an anomaly status. As described hereinabove, the telecom network region hierarchy can be represented in data structures using various suitable techniques. Similarly, anomaly status can be represented in data structures using various suitable techniques.

For purposes of explanation, in the ensuing description, the telecom network region hierarchy is assumed to be a vector of network region identifiers, wherein each network region identifier is associated with a particular network region of the telecom provider network (and can be represented as e.g. a character string or numeric value). In some examples, a SiteId can be utilized as a telecom network region identifier.

Similarly, for purposes of explanation, anomaly status is assumed to be one of two values corresponding to "normal" or "inoperative".

In some embodiments, each training data instance used to train the CART machine learning model **315** includes, at least:

- data indicative of the telecom network region hierarchy (e.g. of a particular session endpoint system) for which a network connectivity report has been received

- the anomaly status as reported in the respective network connectivity report

In some embodiments, one or more training data instance additionally includes a categorical parameter indicating a session endpoint type (e.g. cloud-based, CDN-based, other). The session endpoint type can be encoded using the "one-hot" encoding as known in the art.

In some embodiments, one or more training data instance additionally includes a categorical parameter indicating a session application type (e.g. voice, video, data). The session application type can be encoded using the "one-hot" encoding as known in the art.

It is noted that this training data is included in the network connectivity report structure as shown in **Fig. 4C.** Similarly, it is noted that this training data can be derived from the network connectivity report structure as shown in **Figs. 4A-4B.**

The example trained CART machine learning model **315** (classification tree) illustrated in **Fig. 5** includes decision nodes **510A 510B 510C 510D.** Each of decision nodes **510A 510B 510C 510D** is associated with at least one decision criterion, which determines a next node in a decision path. For example: decision node **510A** is associated with a decision criterion of whether the first network region identifier (i.e. in the vector of network region identifiers being classified) is the USA network region. If so, then the next decision node in the decision path is decision node **510B.**

The trained CART can include leaf nodes **515A 515B 515C 515D 515E.** In the example of **Fig. 5,** leaf nodes **510A 510B 510C 510D** indicate an anomaly status of "normal", whereas leaf node **515E** indicates an anomaly status of "inoperative".

Thus, the decision path of:
Network Region Identifier 1 is USA **(510A)** => Network Region Identifier 2 is NW Region **(510B)** => Network Region Identifier 3 is WA **(510C)** => Network Region Identifier 4 is Spokane **(510D)** =>
leads to the leaf node **515E** indicating anomaly status of "inoperative". In other words: classifying a TNRH consisting of the sequence [USA, NW Region, WA, Spokane] will result in a status of inoperative.

Stated more generally: analysis of the trained model of the current network status indicates that sessions with endpoints in the Spokane region are currently experiencing anomalous behavior (i.e. are inoperative).

It will be understood that the CART of **Fig. 5** is a simple example provided for ease of explanation, and that a CART from an actual deployment can include - for example - tens or more levels of hierarchy and tens of thousands or more decision nodes. Similarly, it will be understood that the CART can include decision nodes with decision functions which examine one or more inputs, and which include two or more branches.

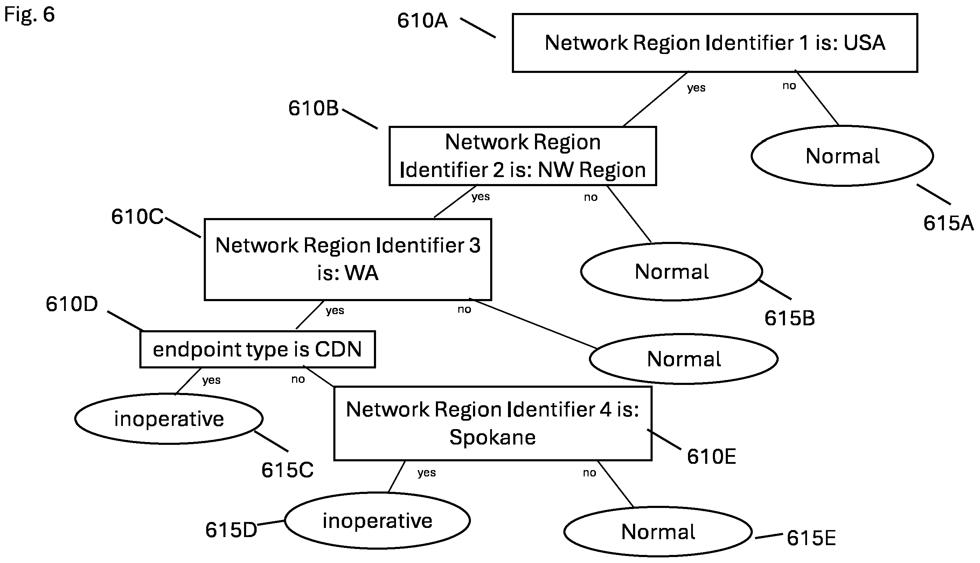

**Fig. 6** illustrates an additional example structure of a trained CART machine learning model, in accordance with some embodiments of the presently disclosed subject matter.

In the trained CART machine learning model (classification tree) illustrated in **Fig. 6,** decision node **610D** evaluates whether the endpoint type of the endpoint being classified is CDN. If so, leaf node **615C** indicates that the status is "inoperative", whereas if not decision node **610E** must be evaluated. Decision node **610E,** in turn indicates that a session endpoint associated with the "Spokane" region is inoperative, and is normal otherwise.

Stated more generally: in this example, analysis of the trained model of the current network status indicates that:

- sessions with CDN endpoints in the WA region are currently experiencing anomalous behavior (i.e. are inoperative)

- sessions with endpoints in the Spokane region are similarly currently experiencing anomalous behavior (i.e. are inoperative)

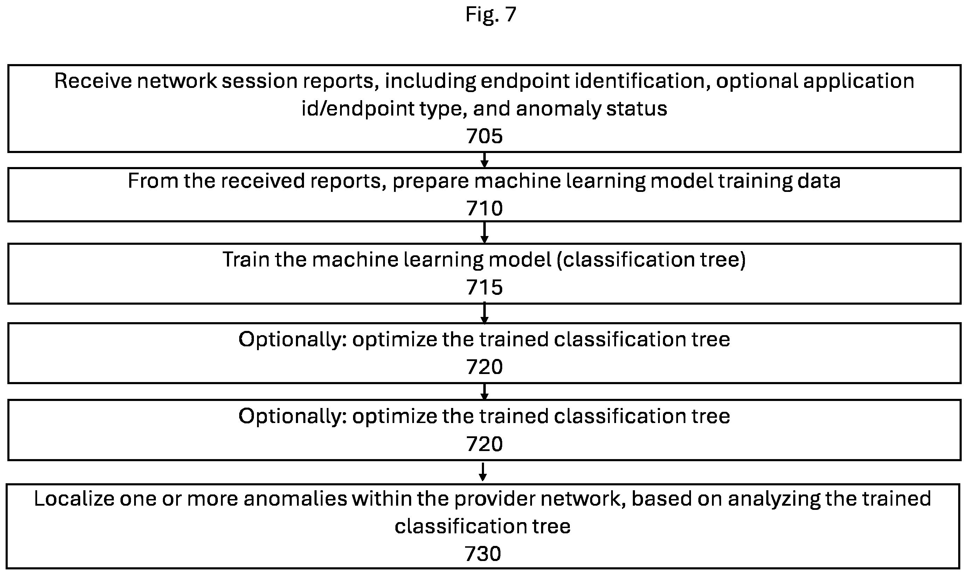

**Fig. 7** illustrates a flow diagram of an example method of localizing an anomaly within a telecom provider network, based on machine learning-based modeling of the network, in accordance with some embodiments of the presently disclosed subject matter.

Processing circuitry **300** (e.g. communication unit **330**) can receive **705** network connectivity reports, which can include e.g. telecom region identification data (such as session endpoint identification data), optional application identification data and/or optional endpoint type data, and anomaly status.

The reports can be originated, for example, by network monitors in different network regions as described above with reference to **Fig. 1.** The reports can be in different formats as described above with respect to **Figs. 4A-4C.**

Processing circuitry **300** (e.g. CART training unit **320**) can next, from the received reports, prepare **710** machine learning model training data (for example: as described above with reference to **Fig. 4C**).

Processing circuitry **300** (e.g. CART training unit **320**) can next train **715** the machine learning model - for example: using recursive splitting or another training method suited to the particular type of machine learning model utilized in CART model **315.**

In some embodiments, processing circuitry **300** can, for example, collect network connectivity reports and then build its network model after a period of time (for example: every 5 minutes) or in response to an event (e.g. an operator instruction). In some other embodiments, processing circuitry **300** can receive network connectivity reports and train CART model **315** as the reports are being received.

In some embodiments, processing circuitry **300** can reset its machine learning model after a period of time or in response to an event. Processing circuitry **300** can then collect new network connectivity reports and build a new network model.

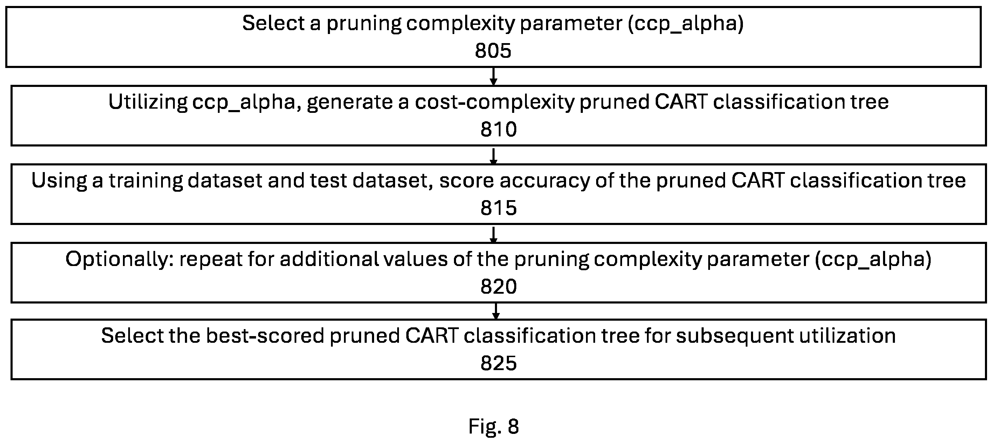

Processing circuitry **300** (e.g. CART training unit **320**) can - optionally - optimize **720** the trained classification tree. For example: processing circuitry **300** (e.g. CART training unit **320**) can use an optimization method such as the one described below with reference to **Fig. 8.** It is noted that optimization of classification trees is often performed to reduce overfitting. However, in some embodiments of the presently disclosed subject matter, overfitting is not relevant (as classification is never performed).

However, optimizing the tree (for example: as detailed in **Fig. 8**) can result in a tree that is generative of more accurate rules for anomaly localization.

Processing circuitry **300** (e.g. CART training unit **320**) can - optionally - scan **725** the trained classification tree for redundant nodes, and remove any such nodes and merge its branches. By way of non-limiting example: processing circuitry **300** (e.g. CART training unit **320**) can detect that both branches of a particular node lead to leaf nodes that have the same anomaly value. In this case, the node can be removed, and replaced with a single leaf node.

Processing circuitry **300** (e.g. anomaly isolation unit **325**) can localize **730** one or more anomalies (or "root causes") within the provider network, based on analyzing the trained classification tree (for example: by determining a decision path which terminates in a leaf indicative of an anomaly, as described above, with reference to **Figs. 5-6**).

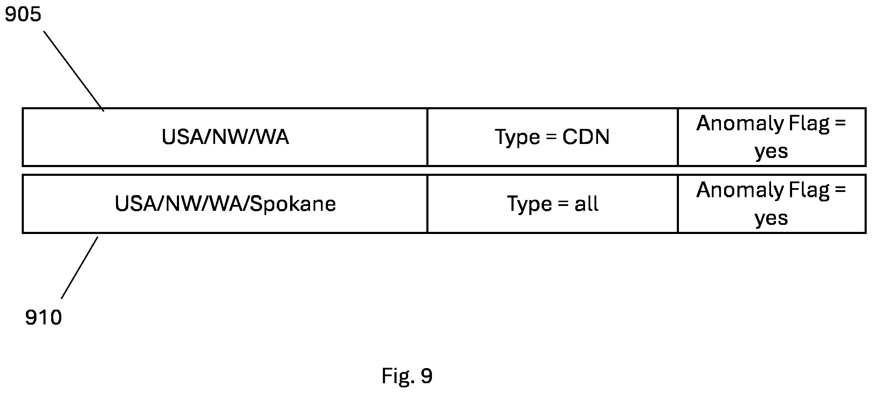

In some embodiments, processing circuitry **300** (e.g. anomaly isolation unit **325**) derive rules from such decision paths, and utilizes these in the analysis, as described below with reference to **Fig. 9.**

It is noted that the method of **Fig. 7** is hereinabove described with reference to architectures as described in **Figs. 1-2,** and to reports as described in **Figs. 4A, 4B,** and **4C.** It is further noted that the method of **Fig. 7** can be applied to additional systems and additional report structures. For example, a system which comprises components organized in a hierarchical fashion (so that an endpoint (or low-level component) is included in a succession of one or more enclosing or higher-level components) can utilize the method of **Fig. 7** for root cause analysis. In this case the processing circuitry **300** can receive reports from the endpoints (or low-level components), and use the method of **Fig. 7** to identify a component associated with an anomaly. By way of non-limiting example, a datacenter can include a series of hierarchical regions, in which endpoints report anomaly status. By way of further non-limiting example, a robotic system (e.g. automated factory) can include a hierarchy of components and subcomponents, in which low-level components can report anomaly status.

It is noted that the teachings of the presently disclosed subject matter are not bound by the flow diagrams illustrated in **Figs. 7-9,** the illustrated operations can occur substantially concurrently, or out of the illustrated order. It is also noted that whilst the flow chart is described with reference to elements of the system **Figs. 1-2,** this is by no means binding, and the operations can be performed by elements other than those described herein.

**Fig. 8** illustrates a flow diagram of an example machine learning model-based method of optimizing a classification tree for utilization in localizing anomalies in a telecom provider network, in accordance with some embodiments of the presently disclosed subject matter.

The method illustrated in **Fig. 8** performs one or more iterations of cost-complexity post-pruning. In some deployments of cost-complexity pruning, the goal is to find a subtree which reduces testing error, even if slightly or somewhat increasing training error - thereby preventing overfitting. In some embodiments of the presently disclosed subject matter, the reduction in tree complexity deriving from cost-complexity pruning can improve the tree's utility and accuracy in localization of network anomalies.

The method illustrated in **Fig. 8** can utilize a training data set in combination with a testing data set, as will be described below.

To begin the method, processing circuitry **300** (e.g. CART optimization unit **335**) can select **805** a first candidate value for the pruning complexity parameter (ccp_alpha).

Processing circuitry **300** (e.g. CART optimization unit **335**) can - using the training data set and the selected ccp_alpha - generate **810** a cost-complexity pruned CART classification tree, as known in the art. In some examples, processing circuitry **300** (e.g. CART optimization unit **335**) can perform the pruning by repeatedly identifying the weakest link in the tree (i.e. the decision node that, would result in the smallest increase in the tree's overall cost complexity). In this case, the "complexity" of a given tree T - for a particular value of ccp_alpha - can be calculated (for example) using the formula:

$$R_{ccp\_alpha}(T) = R(T) + (ccp\_alpha \times |T|)$$

Where R(T) is the empirical error or impurity (e.g. Gini impurity, entropy etc.) of T, and |T| is the number of nodes in T.

A non-limiting example implementation of cost-complexity pruning is described in detail in - for example - https://scikit-learn.org/stable/auto_examples/tree/plot_cost_complexity_pruning.html.

Processing circuitry **300** (e.g. CART optimization unit **335**) can evaluate **815** accuracy of the pruned CART classification tree. To do this, processing circuitry **300** (e.g. CART optimization unit **335**) can determine a training error and testing error.

The training error and test error can be, for example: accuracy (i.e. ratio of correct predictions out of total predictions), and/or precision . (i.e. ratio of true positives out of total positives) and/or similar or other measures over the training data set and test data set respectively.

Processing circuitry **300** (e.g. CART optimization unit **335**) can, for example, determine a weighted average of the training error and the test error, and use this weighted average as a score of tree accuracy.

Processing circuitry **300** (e.g. CART optimization unit **335**) can optionally: repeat **820** the steps of generating a cost-complexity pruned CART classification tree, utilizing successively different values of the pruning complexity parameter ccp_alpha, and determining a respective score of accuracy for each of the pruned classification trees.

Processing circuitry **300** (e.g. CART optimization unit **335**) can then select **825** the tree which exhibits the best score. Processing circuitry **300** (e.g. anomaly detection unit **325**) can then utilize the selected pruned classification tree for anomaly localization.

**Fig. 9** illustrates a flow diagram of an anomaly localization rule table derived from analysis of a trained CART machine learning model (classification tree), in accordance with some embodiments of the presently disclosed subject matter.

In the example, anomaly localization rule table of **Fig. 9,** rules derivative of trained CART machine learning model (classification tree) of **Fig. 6** are illustrated.

The first rule **905** indicates that CDN sessions within the WA region are inoperative. This can indicate that there is a fault within the CDN or with communications to/from the CDN.

The second rule **910** indicates that connectivity within the Spokane region (a subregion of WA) region is inoperative. This can indicate e.g. that there is a fault (such as equipment failure, misconfiguration etc.) of the communications link to/from the Spokane region.

It is to be understood that the invention is not limited in its application to the details set forth in the description contained herein or illustrated in the drawings. The invention is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the presently disclosed subject matter.

It will also be understood that the system according to the invention may be, at least partly, implemented on a suitably programmed computer. Likewise, the invention contemplates a computer program being readable by a computer for executing the method of the invention. The invention further contemplates a non-transitory computer-readable memory tangibly embodying a program of instructions executable by the computer for executing the method of the invention.

Those skilled in the art will readily appreciate that various modifications and changes can be applied to the embodiments of the invention as hereinbefore described without departing from its scope, defined in and by the appended claims.

## Claims

1. A processing circuitry-based method of localizing anomaly-associated equipment in a telecom network, the method comprising:

    a) receiving, from a plurality of network monitors within the telecom network, a plurality of network connectivity reports, wherein each report comprises:

    i. data indicative of a respective telecom network region, and
    ii. data indicative of a respective session anomaly status,

      wherein the telecom network region is associated with a respective telecom network region hierarchy (TNRH),
      the respective TNRH comprising a sequence of one or more telecom network regions, each telecom network region of the respective TNRH including, at least, respective telecom network equipment engineered to be traversed by data traffic to and/or from the respective endpoint system;

    b) training a classification tree-based machine learning model to classify a sequence of one or more telecom network region identifiers to an anomaly status, utilizing, at least, a plurality of training tuples where each training tuple is based on, at least, a respective received network connectivity report; and
    c) identifying a telecom network region as including anomaly-associated equipment, based on, at least, identifying a decision path in the classification tree-based machine learning model, wherein a leaf of the identified decision path is associated with a given anomaly status.

2. The method of claim 1 wherein the data indicative of a respective telecom network region is data indicative of an endpoint system of a respective network session.

3. The method of claim 1, wherein one or more of the network connectivity reports additionally comprises data indicative of a session application type, and wherein the identifying further identifies an anomaly-associated session application type, based on the identified decision path.

4. The method of claim 1, wherein one or more of the network connectivity reports additionally comprises data indicative of an endpoint type, and wherein the identifying further identifies an anomaly-associated endpoint application type, based on the identified decision path.

5. The method of claim 1, wherein the training comprises:

    a) training the classification tree-based machine learning model to classify a sequence of one or more telecom network region identifiers to an anomaly status, utilizing, at least, the one or more training tuples, thereby giving rise to an initial classification tree;
    b) for one or more iterations: performing cost-complexity pruning on the initial classification tree, the pruning being based on a respective pruning complexity parameter, thereby resulting in one or more candidate pruned classification trees;
    c) selecting at least one of the candidate pruned classification trees according to a classification tree selection criterion, and utilizing the selected pruned classification tree.

6. The method of claim 1, wherein the training comprises recursive splitting.

7. The method of claim 1, wherein the training utilizes a first proportion of the network connectivity reports to train the machine learning model, and second proportion of the network connectivity reports to evaluate the training of the machine learning.

8. The method of claim 1, additionally comprising:

    c) detecting, in the trained classification tree-based machine learning model, a node from which two leafs of identical anomaly status descend; and
    d) removing the detected node from the trained classification tree-based machine learning model.

9. A processing circuitry-based system of localizing anomaly-associated equipment in a telecom network, the processor being configured to:

    a) receive, from a plurality of network monitors within the telecom network, a plurality of network session reports, wherein each report comprises:

      i. data indicative of a telecom network region of an endpoint system of a respective network session, and
      ii. data indicative of a respective session anomaly status,

        wherein the telecom network region of the endpoint system is associated with a respective telecom network region hierarchy (TNRH),
        the respective TNRH comprising a sequence of one or more telecom network regions, each telecom network region of the respective TNRH including, at least, respective telecom network equipment engineered to be traversed by data traffic to and/or from the respective endpoint system;

b) train a classification tree-based machine learning model to classify a sequence of one or more telecom network region identifiers to an anomaly status, utilizing, at least, a plurality of training tuples where each training tuple is based on, at least, a respective received network session report; and

c) identify a telecom network region as including anomaly-associated equipment, based on, at least, identifying a decision path in the classification tree-based machine learning model, wherein a leaf of the identified decision path is associated with a given anomaly status.

10. A computer program product comprising a computer readable non-transitory storage medium containing program instructions, which program instructions when read by a processor, cause the processing circuitry to perform a method of localizing anomaly-associated equipment in a telecom network, the method comprising:

a) receiving, from a plurality of network monitors within the telecom network, a plurality of network session reports, wherein each report comprises:

i. data indicative of a telecom network region of an endpoint system of a respective network session, and
ii. data indicative of a respective session anomaly status,

wherein the telecom network region of the endpoint system is associated with a respective telecom network region hierarchy (TNRH), the respective TNRH comprising a sequence of one or more telecom network regions, each telecom network region of the respective TNRH including, at least, respective telecom network equipment engineered to be traversed by data traffic to and/or from the respective endpoint system;

b) training a classification tree-based machine learning model to classify a sequence of one or more telecom network region identifiers to an anomaly status, utilizing, at least, a plurality of training tuples where each training tuple is based on, at least, a respective received network session report; and

c) identifying a telecom network region as including anomaly-associated equipment, based on, at least, identifying a decision path in the classification tree-based machine learning model, wherein a leaf of the identified decision path is associated with a given anomaly status.

Fig. 1

Endpoint 105A

Network monitor 135A

Demarcation device 110A

Endpoint 105B

Network monitor 135B

Demarcation device 110B

Link to other provider networks 130

Core Network 115

Network monitor 135C

Demarcation device 110C

Endpoint 105C

Network Monitoring System 120

EP 4 708 797 A1

**NE Region 215**

**SE Region 225**

**Gateway 230**

**NW Region 210**

OR 240

MT 245

**WA 235**

Seattle 245

Spokane 250

Demarcation device 290A

Demarcation device 290B

**SW Region 220**

Fig. 2

Network Monitoring System 120

Processing circuitry 300

| | |
|---|---|
| Processor 305 | Memory 310 |
| CART Model 315 | CART Training Unit 320 |
| Anomaly Isolation Unit 325 | CART Optimization Unit 335 |

Communications Unit 330

Fig. 3

| Endpoint IP address 405A | Application Id (optional) 410A | Endpoint type (optional) 415A | Anomaly Status 420A |
|---|---|---|---|

Fig. 4A

| "USA/NW/WA/Spokane" | Application Id (optional) | Endpoint type (optional) | Anomaly Status |
|---|---|---|---|

Fig. 4B

| Network Region Identifier | Application Id (optional) | Endpoint type (optional) | Anomaly Status |
|---|---|---|---|

Fig. 4C

EP 4 708 797 A1

Fig. 5

Fig. 6

610A — Network Region Identifier 1 is: USA

yes / no

610B — Network Region Identifier 2 is: NW Region

Normal — 615A

yes / no

610C — Network Region Identifier 3 is: WA

Normal — 615B

yes / no

610D — endpoint type is CDN

Normal

yes / no

inoperative — 615C

Network Region Identifier 4 is: Spokane — 610E

yes / no

615D — inoperative

Normal — 615E

EP 4 708 797 A1

Fig. 7

Receive network session reports, including endpoint identification, optional application id/endpoint type, and anomaly status
705

From the received reports, prepare machine learning model training data
710

Train the machine learning model (classification tree)
715

Optionally: optimize the trained classification tree
720

Optionally: optimize the trained classification tree
720

Localize one or more anomalies within the provider network, based on analyzing the trained classification tree
730

| Select a pruning complexity parameter (ccp_alpha) 805 |
|---|
| Utilizing ccp_alpha, generate a cost-complexity pruned CART classification tree 810 |
| Using a training dataset and test dataset, score accuracy of the pruned CART classification tree 815 |
| Optionally: repeat for additional values of the pruning complexity parameter (ccp_alpha) 820 |
| Select the best-scored pruned CART classification tree for subsequent utilization 825 |

Fig. 8

905

| USA/NW/WA | Type = CDN | Anomaly Flag = yes |
|---|---|---|
| USA/NW/WA/Spokane | Type = all | Anomaly Flag = yes |

910

Fig. 9

**EUROPEAN SEARCH REPORT**

Application Number

EP 25 20 0224

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 114 244 691 A (INST OF CHINA MOBILE COMMUNICATION CO LTD ET AL.) 25 March 2022 (2022-03-25) * the whole document * | 1-10 | INV. H04L41/0677 H04L41/142 H04L41/16 |
| Y | EP 4 120 653 A1 (EXFO INC [CA]) 18 January 2023 (2023-01-18) * paragraph [0001] - paragraph [0186]; figures 1-12 * | 1-10 | ADD. H04L41/12 H04L43/065 H04L43/12 |
| A | ZAINAB AMEEMA ET AL: "Faulted Line Identification and Localization in Power System using Machine Learning Techniques", 2019 IEEE INTERNATIONAL CONFERENCE ON BIG DATA (BIG DATA), IEEE, 9 December 2019 (2019-12-09), pages 2975-2981, XP033721544, DOI: 10.1109/BIGDATA47090.2019.9006377 [retrieved on 2020-02-20] * page 2975, right-hand column, line 5 - page 2981, left-hand column, line 19 * | 1-10 | |
| A | US 10 075 356 B2 (AT & T IP I LP [US]) 11 September 2018 (2018-09-11) * column 1, line 20 - column 15, line 54; figures 1-11 * | 1-10 | TECHNICAL FIELDS SEARCHED (IPC) H04L |

The present search report has been drawn up for all claims

| Place of search | Date of completion of the search | Examiner |
|---|---|---|
| Munich | 8 January 2026 | Lupia, Sergio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 708 797 A1**

## ANNEX TO THE EUROPEAN SEARCH REPORT
## ON EUROPEAN PATENT APPLICATION NO.

EP 25 20 0224

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2026

| Patent document cited in search report | | Publication date | Patent family member(s) | | Publication date |
|---|---|---|---|---|---|
| CN 114244691 | A | 25-03-2022 | NONE | | |
| EP 4120653 | A1 | 18-01-2023 | EP 4120653 | A1 | 18-01-2023 |
| | | | US 2023033680 | A1 | 02-02-2023 |
| US 10075356 | B2 | 11-09-2018 | US 2013051248 | A1 | 28-02-2013 |
| | | | US 2015085675 | A1 | 26-03-2015 |
| | | | US 2016149783 | A1 | 26-05-2016 |

EPO FORM P0459

For more details about this annex : see Official Journal of the European Patent Office, No. 12/82